(19) Europäisches Patentamt / European Patent Office / Office européen des brevets

(11) **EP 3 710 508 B1**

(12) **EUROPEAN PATENT SPECIFICATION**

(45) Date of publication and mention of the grant of the patent:
**16.08.2023 Bulletin 2023/33**

(21) Application number: **18800223.2**

(22) Date of filing: **16.11.2018**

(51) International Patent Classification (IPC):
*C08G 59/18* (2006.01)  *C09D 163/00* (2006.01)
*C09D 5/08* (2006.01)  *C08G 59/06* (2006.01)

(52) Cooperative Patent Classification (CPC):
(C-Sets available)
**C08G 59/182; B05D 1/36; B05D 7/542;
C08G 59/066; C08G 59/184; C08G 59/186;
C09D 5/002; C09D 5/08; C09D 163/00;
B05D 2420/01; B05D 2420/02; B05D 2504/00**

(Cont.)

(86) International application number:
**PCT/EP2018/081585**

(87) International publication number:
**WO 2019/097002 (23.05.2019 Gazette 2019/21)**

(54) **HARDENER COMPOSITION FOR AQUEOUS EPOXY RESIN BASED COATING COMPOSITIONS, PROCESS FOR ITS PREPARATION AND USE THEREOF**

HÄRTERZUSAMMENSETZUNG FÜR WÄSSRIGE EPOXIDHARZBASIERTE BESCHICHTUNGSZUSAMMENSETZUNGEN, VERFAHREN ZU DEREN HERSTELLUNG UND VERWENDUNG DAVON

COMPOSITION DURCISSANTE POUR COMPOSITIONS DE REVÊTEMENT À BASE DE RÉSINE ÉPOXY AQUEUSE, LEUR PROCÉDÉ DE PRÉPARATION ET LEUR UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.11.2017 EP 17202472
29.11.2017 EP 17204542**

(43) Date of publication of application:
**23.09.2020 Bulletin 2020/39**

(73) Proprietor: **Allnex Austria GmbH
8402 Werndorf (AT)**

(72) Inventors:
• **HOBISCH, Gerald
8075 Hart Bei Graz (AT)**
• **BERNSTEINER, Iris
8045 Graz (AT)**
• **OSSANNA, René
8111 Gratwein-Strassengel (AT)**

(74) Representative: **Boon, Greet et al
Allnex Belgium, S.A.
Patent Department
Anderlechtstraat 33
1620 Drogenbos (BE)**

(56) References cited:
**EP-A1- 2 727 968**   **EP-A2- 0 491 550**
**WO-A1-2011/118791**   **WO-A1-2012/150312**

• **SUN H. ET AL: "Synthesis and characterisation of emulsion-type curing agent of water-borne epoxy resin", JOURNAL OF APPLIED POLYMER SCIENCE, 30 May 2013 (2013-05-30), pages 2652-2659, XP002780132,**

(52) Cooperative Patent Classification (CPC): (Cont.)

C-Sets
B05D 2420/01, B05D 2401/20;
B05D 2420/01, B05D 2504/00;
B05D 2420/02, B05D 2401/10

**Description**

Field of the Invention

This invention relates to a hardener composition for aqueous epoxy resin based coating compositions, to processes for their preparation, and to their use in two-pack aqueous epoxy resin compositions, especially those used for coating of metals and mineral substrates.

Background of the Invention

In WO 2011/118 791 A1, corresponding to SG 184 260 A1, a method is disclosed for forming a coating film with an excellent curability at low temperatures made from an aqueous coating composition which contains an aqueous epoxy polyamine resin (A) that is made from an epoxy resin and a ketimine of an amine having at least one primary amino group and at least one secondary amino group in each molecule, and a compound (B) that has one or more (meth)acryloyl groups in each molecule. In a preferred embodiment of this patent application, as disclosed in the second paragraph of section [0006] bridging pages 2 and 3 of the SG 184 260 A1 publication, the aqueous coating composition is a two pack type aqueous coating composition in which the main coating material liquid contains the aqueous epoxy polyamine resin (A) and the curing agent contains the compound (B). The curing reaction in this patent application is a Michael addition reaction between the aqueous epoxy polyamine resin (A) and the compound (B), under addition of the amino groups to the activated olefinically unsaturated groups in (B), see section [0007], second sentence. There is no disclosure in this application WO 2011/118 791 A1, corresponding to SG 184 260 A1, of combining the aqueous epoxy polyamine resin (A) with an epoxy resin.

In EP 2 727968 A1, corresponding to WO 2014/072308 A2, a curing agent for epoxy resins is disclosed which is a multifunctional amine **AC** having more than one primary amino group per molecule, and at least one moiety per molecule derived from the reaction of a molecule **C** containing at least one reactive group which is preferably an epoxide group, with a molecule having at least one blocked primary amino group and at least one group which is reactive towards the at least one reactive group of compound **C,** which is selected from the group consisting of secondary amino groups >NH, of hydroxyl groups -OH, of mercaptan groups -SH, of amide groups -CO-NHR, where R can be hydrogen or an alkyl group having from one to twelve carbon atoms, of hydroxyester groups, and of acid groups, particularly of carboxyl groups -COOH, sulphonic acid groups -SOsH, and phosphonic acid groups -$PO_3H_2$, characterised in that the sum of mass fraction of oxyethylene and of oxypropylene moieties in compound **C** is below 5 %. For the preparation of two-pack epoxy resin systems, the amine **AC** is emulsified in water using an emulsifier **F** to yield an aqueous dispersion, and the epoxy resin **E** is then dispersed in the aqueous dispersion of the amine **AC**. Depending on the amount of emulsifier **F** used when dispersing the amine **AC** in water, it may be needed to add further emulsifier **F** before or together with the epoxy resin **E**. There is no mention of the presence of moieties derived from dimer fatty acids in the multifunctional amine **AC,** nor of the incorporation of dimer fatty acids into an epoxy-amine adduct derived from diepoxides, hydroxy-functional aromatic compounds, and amines.

In the publication by Sun H. et al., "Synthesis and characterisation of emulsion-type curing agent of water-borne epoxy resin", published in Journal of Applied Polymer Science on 30. May 2013, the influence of the molar ratios of polyethylene glycol to epoxy resin, and of amine, in this case triethylene tetramine, to epoxy resin was investigated. The epoxy resin used was a bisphenol A epoxy resin ("ER") with a specific amount of substance of epoxide groups of 227.3 mol/kg (corresponding to the so-called "epoxy equivalent mass" which is the molar mass, divided by the number of epoxide groups in one molecule of the epoxy resin, of 0.44 g/mol). A hydrophilic curing agent was prepared by reacting the said epoxy resin with polyethylene glycol having an average molar mass of 400 g/mol ("PEG"), and then with triethylene tetramine ("TETA"), both with varying molar ratios of PEG to ER, and TETA to ER. No further constituents were used in these investigations to make the curing agent.

In WO 2012/150 312 A1, a hydrophilically modified multifunctional amine **AC** is disclosed which has more than one primary amino group per molecule, and at least one group per molecule derived from the reaction of an epoxide group with a reactive group selected from the group consisting of secondary amino groups >NH, hydroxyl groups -OH, mercaptan groups -SH, amide groups -CO-NHR, where R can be hydrogen or an alkyl group having from one to twelve carbon atoms, hydroxyester groups, and acid groups, particularly carboxyl groups - COOH, sulphonic acid groups -$SO_3H$, and phosphonic acid groups -$PO_3H_2$, and preferably, also moieties which are compatible with an epoxy resin. Hydrophilic modification is effected by incorporation of moieties derived from oxyethylene or oxypropylene moieties or their mixtures into the molecules of **AC**. No modification of the multifunctional amine **AC** with fatty acids or dimers thereof has been mentioned.

In EP 0 491 550 A2, a water-emulsifiable epoxy resin composition is disclosed which comprises the reaction product A) of one or more polyepoxides i) in a sufficient amount such that the reaction product has terminal glycidyl ether units; optionally, one or more hydroxy-functional polyaromatic compounds ii) in a sufficient amount to achieve the targeted specific amount of substance of epoxide groups, stated there as the inverse quantity "epoxy equivalent weight"; optionally, one or more chain terminators iii) in a sufficient amount to achieve the targeted molar mass and viscosity; characterised in that the reaction product further comprises one or more of compounds iv) selected from the group consisting of nominally difunctional $C_{12}$-to $C_{36}$- fatty acids and dimers of unsaturated $C_{12}$- to $C_{36}$- fatty acids in a sufficient amount to improve the coating properties of coatings prepared from the reaction product; further characterised in that the composition further comprises a sufficient amount of a surfactant B) to form a stable emulsion of the reaction product (A) in water wherein the surfactant comprises an alkyl aryloxy poly(propyleneoxy) poly(ethyleneoxy) ethanol or a $C_{12}$- to $C_{36}$-hydroxycarbyloxy poly(propyleneoxy) poly(ethyleneoxy) ethanol wherein the hydrocarbyloxy moiety is the residue of a $C_{12}$- to $C_{36}$- fatty alcohol or a $C_{12}$- to $C_{36}$- fatty acid. No reaction products with amines are mentioned.

Both WO 2012/150312 A1 and WO 2014/072308 A2 relate to aqueous epoxy resin based coating compositions comprising multifunctional amino hardeners. These coating compositions are two-pack coating compositions made from aqueous dispersions comprising a multifunctional amine having more than one primary amino group per molecule, and an epoxy resin which latter is dispersed in this aqueous dispersion before use. The multifunctional amine is made in a multistep reaction wherein at first, the primary amino groups of an amine having primary and secondary amino groups are blocked by reaction with a ketone to form a ketimine. In a separate step, a chain-extended epoxide resin is made in an advancement reaction from a low molar mass difunctional epoxy compound, an aromatic diol, and a customary catalyst, optionally in the presence of an emulsifier, under removal of water. In the next step, the ketimine and, optionally, a mixture of further amines, are added to the advanced epoxy resin, and addition reaction of the amino groups to the epoxide groups under formation of hydroxyamines proceeds. Finally, water is added under stirring to the product of this step to form a dispersion, and to uncap the blocked primary amino groups, and the ketone blocking agent is distilled off. An at least difunctional epoxy resin is then added to this dispersion to form the two pack coating composition. No modification of the said multifunctional amino hardeners with fatty acids or dimers thereof has been mentioned.

A hydrophilically modified amino hardener for epoxy resins had already been known from EP 0 000 605 A1, wherein a hardener for aqueous epoxy resins is disclosed, said hardener being a reaction product of a polymeric epoxy compound a), a polyalkylene ether polyol b), and a polyamine c), a) preferably being insoluble in water, and b) being soluble in water. In a preferred embodiment, the hardener is a reaction product from a mixture of a mass fraction of from 20 % to 80 % of an adduct ab) of a polymeric epoxy compound a) with from 2 mol to 4 mol of epoxide groups and a polyalkylene ether polyol b) with from 0.2 mol to 1.5 mol of hydroxyl groups, and a mass fraction of from 80 % to 20 % of component c) which is an aliphatic, cycloaliphatic, or heterocyclic polyamine or a mixture of such polyamines, the ratio of the amount of substance of amino hydrogen atoms to the amount of substance of reactive epoxide groups being from 3 mol/mol to 11 mol/mol. A further embodiment is replacing the polyamine c) by a Michael adduct thereof with an alkenoic acid having from three to six carbon atoms, or a nitrile, alkyl ester with an alcohol having from one to four carbon atoms, amide, or N-methylamide or N,N-dimethylamide thereof, or reacting the reaction product of ab) and c) with the said alkenoic acid or its derivatives as mentioned. No modification of the said amine hardeners with fatty acids or dimers thereof has been mentioned.

While all these coating compositions discussed supra have merit for use in coating compositions, and provide corrosion protection without liberation of volatile amines during application and curing, the adhesion to topcoats applied onto paint films made from these two-pack coating compositions as described supra has been found to need improvement, particularly when applying such coating compositions for topcoats that are not in the form of aqueous dispersions, but based on solventless paints, or solvent-based paints, particularly such paints as disclosed, i. a. in EP 2 374 836 A1, and WO 2014/166880 A1, where the crosslinking process is a Michael addition reaction between CH-acidic compounds as Michael donors, and electron-deficient olefinically unsaturated compounds as Michael acceptors.

Object of the Invention

It has therefore been the object of this invention to develop optimised hardeners for epoxy resin based aqueous coating compositions that can be used in a two-pack formulation, and which lead to coating films having excellent corrosion protection, and improved adhesion to further coatings applied thereon.

Summary of the Invention

It has been found, in the experiments that have led to the present invention, that the incorporation of dimer fatty acids in the form of beta-hydroxyesters into hardener compositions **H** for epoxy resins **E** provides epoxy-based coating compositions that exhibit very good adhesion to substrates, particularly metal substrates, and also show improved interlayer adhesion for further coatings which are applied upon this epoxy-based coating layer. The invention therefore relates to hardeners **H** for epoxy resins, as described by the present claims which hardeners **H** are derived from reaction products of at least difunctional epoxides **H1**, of at least difunctional hydroxypolyoxyalkylenes **H2,** optionally of at least difunctional hydroxyaromatic compounds **H3,** of at unsaturated fatty acids **H42** having a carboxyl functionality of more than one which are mixtures of the so-called dimer fatty acids and trimer fatty acids, optionally with minor quantities of monofunctional fatty acids also being present in the commercial products, which compounds H42 are incorporated into the hardeners H in the form of beta-hydroxyesters H4 which are formed by reaction of compounds H42 with the at least difunctional epoxides H1, and of secondary amines H5 having additional carbonylimine-blocked primary amino groups, obtained by reaction of amines H51 having at least one, preferably at least two primary amino groups and at least one secondary amino group with carbonyl compounds H52 which have an aldehyde or ketone carbonyl group, and of at least one, preferably both, of hydroxy-functional secondary amines H6 having at least one secondary amino group and at least one hydroxyl group, and of amines H7 having at least one primary, and at least one tertiary amino group. Water is then added to these reaction products to decompose the carbonylimines (ketimines or aldimines) and to liberate the primary amino groups in the resulting hardener H. The invention further relates to a process of making the as described in the present claims to combinations of these hardeners H with epoxy resins E to formulate water-borne coating compositions, and to the application of these coating compositions to substrates which are further coated with aqueous or non-aqueous coating compositions.

Detailed Description of the Preferred Embodiments

The at least difunctional epoxides H1 are preferably glycidyl esters of at least difunctional acid compounds H11, or glycidyl ethers of at least difunctional hydroxy compounds H12. These said acid compounds H11 are aromatic or aliphatic carboxylic acids having up to forty carbon atoms, and are preferably selected from the group consisting of terephthalic acid, isophthalic acid, adipic acid, dodecanedioic acid, and cyclohexane dicarboxylic acid, and these said hydroxy compounds H12 are aromatic or aliphatic compounds having at least two hydroxyl groups and up to forty carbon atoms per molecule, and are preferably selected from the group consisting of aliphatic dihydroxy compounds, preferably hexane diol, dihydroxycyclohexane, and oligomeric or polymeric oxyalkylenediols, and of aromatic dihydroxy compounds, particularly hydroquinone, resorcinol, 4,4'-dihydroxydiphenyl, 4,4'-dihydroxydiphenyl-sulphone, 4,4'-dihydroxybenzophenone, 4,4'-dihydroxydiphenylmethane, 2,2-(4,4'-dihydroxy-diphenyl)propane, or from low molar mass or oligomeric novolaks based on phenol, and/or cresol isomers which have more than two, and up to five phenolic hydroxyl groups for the commercially available grades that are used to prepare the so-called epoxy novolak resins.

The at least difunctional hydroxypolyoxyalkylenes H2 obey the formula $HO-(R^1-O)_n-H$ where $R^1$ is a divalent linear or branched alkylene group of from two to four carbon atoms, n being preferably from five to one hundred, and have at least two hydroxyl groups, and are preferably oxyethylene homopolymers or copolymers having both oxyethylene and oxypropylene units in their molecular structure, where the amount of substance-fraction of oxyethylene units in the copolymer molecules is preferably at least 50 %. Preferred oxyethylene-based polymeric polyols have preferably a number average molar mass of from 1 kg/mol to 20 kg/mol. As the reactivity of aliphatically bound hydroxyl groups during an advancement reaction is too low, moieties derived from the at least difunctional hydroxypolyoxyalkylenes H2 have to be introduced into the hardeners H by first forming an adduct of a diepoxide H21 which is preferably selected from the same group of compounds as H1, but independently thereupon, preferably bisphenol A diglycidylether, and the hydroxypolyoxyalkylenes H2 in the presence of a strong acid catalyst K1, preferably a Lewis acid catalyst, and subjecting this adduct to an advancement reaction with further epoxides and the coreactants as mentioned supra. Preferred Lewis acid catalysts K1 are boron trifluoride $BF_3$, tetrafluoroboric acid $HBF_4$, complexes of boron trifluoride with carboxylic acids or aliphatic ethers, and amine complexes of boron trifluoride with aliphatic or aromatic amines, such as ethylamine, N-methylcyclohexylamine, isopropylamine, piperidine, N-methyl-piperidine, benzylamine, dimethylbenzylamine, N-methylaniline, N,N-dimethylaniline, or aniline, or mixtures of two or more of these amines. Preferred hydroxypolyoxyalkylenes H2 are selected from the group consisting of polyoxyethylene diols having a mass average molar mass of from 1000 g/mol to 10000 g/mol.

The at least difunctional hydroxyaromatic compounds H3 are aromatic dihydroxy or polyhydroxy compounds, preferably selected from the group consisting of hydroquinone, resorcinol, 4,4'-dihydroxydiphenyl, 4,4'-dihydroxydiphenyl ether, 4,4'-dihydroxydiphenyl-sulphone ("bisphenol S"), 4,4'-dihydroxybenzophenone, bisphenol A, bisphenol F, and novolaks of low to medium degree of oligomerisation. Preferred are bisphenol A and bisphenol F, as well as mixtures thereof.

The at least difunctional unsaturated fatty acids H42 are preferably mixtures of the so-called dimer fatty acid and trimer fatty acid isomers, with minor quantities of (unreacted) monofunctional acids also being present in the commercial products, which are mostly prepared from tall oil by heat treatment on clay catalysts. Being acids, they directly react with epoxides under advancement reaction conditions, under formation of beta-hydroxy esters H4. The fatty acids H42 replace partly, or completely, the hydroxyaromatic compounds H3 in the advancement reaction.

The secondary amines H5 having additional carbonylimine-blocked primary amino groups are made in a separate reaction from amines H51 having at least one, preferably at least two primary amino groups, and at least one secondary amino group and carbonyl compounds H52 which have an aldehyde or ketone carbonyl group. The stoichiometry is selected so that all primary amino are consumed by reaction with the carbonyl blocking compound H51 to form Schiff bases, or imines having the structure - N = C <, and only the secondary amino groups remain. Preferred amines **H51** are diamino-oligoalkyleneimines and diamino-polyalkyleneimines, preferably selected from the group consisting of diethylenetriamine, triethylenetetramine, tetra-ethylenepentamine, dipropylenetriamine, tripropylene-tetramine, tetrapropylene-pentamine, dibutylene-triamine, tributylenetetramine, tetra-butylenepentamine, and dihexylenetriamine, tri-hexylenetetramine, tetrahexylenepent-amine. These have all two primary amino groups, and a growing number of secondary amino groups. Monosecondary amines function as chain stopper, having an amine functio-nality of one; disecondary amines lead to linear chains, and amine with a larger number of secondary amino groups should only be used in limited amounts as they give rise to branching and crosslinking during the reaction. Preferred carbonyl compounds **H52** are those which have a ketone carbonyl group, and more preferably are selected from the group consisting of acetone, methylethyl ketone, diethylketone, methylpropyl ketone, and methylisobutyl ketone.

The secondary hydroxyamines **H6** have one secondary amino group, and at least one hydroxyl group, and are preferably linear, branched or cyclic aliphatic amines, preferably selected from the group consisting of diethanolamine, dipropanolamine, diisopropanolamine, dibutanolamine, N-methylethanolamine, N-ethylethanolamine, N-methylpropanolamine, N-methylisopropanolamine, and 4-hydroxypiperidine.

The amines **H7** having at least one primary, and at least one tertiary amino group and are used to introduce basic groups into the reaction product, and are preferably linear, branched or cyclic aliphatic amines, preferably selected from the group consisting of N,N-dimethylaminoethylamine, N,N-diethylaminoethylamine, N,N-dimethylaminopropylamine, and N,N-diethylaminopropylamine.

The presence of both amines **H6** and **H7** leads to improved stability of the aqueous dispersion of the hardener **H,** and enhances the ability of these hardeners **H** to emulsify added epoxy resins which are not hydrophilically modified themselves, without impairing the intercoat adhesion with topcoats applied onto paint films made from these two-pack coating compositions as described supra, particularly when applying such coating compositions for topcoats that are not in the form of aqueous dispersions, but based on solventless paints, or solvent-based paints, particularly such paints based on systems as disclosed, i. a., in EP 2 374 836 A1, WO 2014/166880 A1, and WO 2018/005 077 A1, where the crosslinking process is a Michael addition reaction between CH-acidic compounds as Michael donors, and electron-deficient olefinically unsaturated compounds as Michael acceptors, under formation of carbon-carbon bonds.

Monofunctional epoxides **H8** can optionally be used to adjust the amount of free amine groups of the hardener **H.** Preferred are glycidyl ethers of phenols, such as the glycidyl ether of cresol, and glycidyl esters of monofunctional aliphatic carboxylic acids having from five to twenty carbon atoms, particularly preferred are glycidyl esters of branched aliphatic carboxylic acids, such as the glycidyl esters of neopentanoic acid, and neodecanoic acid.

The process for the preparation of the hardener **H** comprises the following steps: as described in the present claims

(a) preparation of a hydrophilically modified epoxy resin by reacting an at least difunctional hydroxypolyoxyalkylene **H2** and an at least difunctional epoxide **H1** in the presence of an acidic catalyst **K1,** under heating up to 200°C, preferably from 50°C to 150 °C, particularly preferred from 70°C to 110°C,

(b) preparing, in a separate reaction, an imine **H5** from an aliphatic amine **H51** having at least one, preferably at least two primary amino groups, and at least one secondary amino group in its molecule, and a blocking agent **H52** for primary amino groups, which blocking agent has preferably carbonyl groups of a ketone or of an aldehyde, to form an imine **H5** which is a ketimine or an aldimine,

(c) adding to the product of step (a) the unsaturated fatty acids **H42** having a carboxyl functionality of more than one, and a catalyst (preferably triphenyl phosphine), and optionally, the hydroxyaromatic compounds **H3,** where in the reaction of these, a part of the epoxide groups is consumed. Optionally, an inert solvent (preferably an aliphatic etheralcohol) is added, and the product **H5** from step (b) is added and reacted until the secondary amino groups of **H5** have been consumed,

(d) optionally, secondary hydroxyamines **H6** are added, and the reaction is continued until all secondary amino groups of **H6** have been consumed,

(e) optionally, primary-tertiary amines **H7** are added and the reaction is conducted until all epoxide groups have been consumed,

wherein either or both of steps (d) and (e) are performed, in any sequence,

(f) further diepoxides **H1** are optionally added after addition of either or both of **H6** and **H7** if needed to consume all remaining primary or secondary amino groups,

(g) the reaction product of step (c), (d), (e) or (f) is then neutralised by addition of an organic or inorganic acid, and water is added to the neutralised mixture to decompose the ketimine groups, under regeneration of primary amino groups, and of the blocking agent which is then distilled off together with the optional etheralcohol solvent.

The amount of free amino groups in the resulting dispersion can be adjusted in an additional step (h) by addition of monofunctional epoxides **H8.**

It has been found, in the investigations upon which the present invention is based that the specific amount of substance $n$(HE) / $m_s$ of beta-hydroxy ester structures derived from component **H42** in the hardener **H,** based on the mass of solids $m_s$ in the aqueous hardener dispersion, is from 0.2 mol/kg to 2 mol/kg, particularly preferably, from 0.25 mol/kg to 1.5 mol/kg, and especially preferred, from 0.28 mol/kg to 1.3 mol/kg. When using lower specific amounts of substance, the increase in adhesion between the epoxy-resin based primer layer and the coating applied onto the said primer layer is not manifest, and when using higher specific amounts of substance, adhesion of the said primer layer to the metal substrate is impaired.

The hardeners **H** according to the invention can be used in combination with epoxy resins, i. e., epoxide-functional resins, particularly for the formulation of primer coatings which are used, i. a., for corrosion protection of metals, and for coating of mineral substrates. In preparing water-borne two-pack coating compositions, an epoxy resin **E** in liquid form, optionally together with reactive diluents, thereby avoiding an additional step of aqueously dispersing the epoxy resin component of the two-pack coating composition, is added to the aqueous dispersion of the hardener **H,** under stirring. It is, however, also possible to add an aqueous dispersion of the epoxy resin **E** to an aqueous dispersion of the hardener **H,** under stirring.

The epoxy resin **E** is any liquid epoxy resin, such as the grades known as type 1 liquid epoxy resins which are based on bisphenol A diglycidylether (BADGE, molar mass 340.4 g/mol, melting temperature 43°C) having a mass average molar mass of from 350 g/mol to 380 g/mol and are liquid at room temperature (25°C), liquid mixtures of higher molar mass epoxy resins based on BADGE which themselves are solid at room temperature with reactive diluents which are monofunctional such as alkyl phenol glycidylethers, particularly cresylglycidylether, p-tert-butylphenylglycidylether, and glycidylethers and glycidylesters made from cashew nuts shell liquid, long chain alkyl glycidylethers and glycidylesters, particularly glycidylneodecanoate and $C_6$- to $C_{18}$-alkyl glycidylethers whereof 2-ethylhexyl glycidylether and mixtures of glycidylethers of $C_8$- to $C_{10}$-alcohols or of $C_{12}$- to $C_{14}$-alcohols are mentioned, or difunctional such as butanediol diglycidylether, hexanediol diglycidylether, neopentylglycol diglycidyl-ether, cyclohexanedimethanol diglycidylether, dipropyleneglycol digylcidylether, and polypropyleneglycol diglycidylether, or having higher functionality such as trimethylolpropane trigylcidylether and pentaerythritol tetraglycidylether.

The aqueous dispersion of the epoxy resin **E** can be made by chemically incorporating oxyethylene homopolymers or copolymers into the epoxy resin, or by adding emulsifiers **F.** The emulsifier **F** is preferably a non-ionic emulsifier. Alternatively, a combination of a non-ionic emulsifier **F** with an ionic emulsifier may be used. The emulsifier **F** is preferably a non-ionic emulsifier where the hydrophilic portion comprises polyoxyalkylene moieties having two or three carbon atoms in the alkylene group, or a combination of a nonionic and an anionic emulsifier.

Non-ionic emulsifiers which can be used for this invention are preferably selected from the group consisting of monoesters of glycerol and fatty acids, partial esters of polyhydric alcohols such as sugar alcohols, with fatty acids, where esters are referred to as "partial ester" if at least one, preferably at least two ethoxylated fatty acids, ethoxylated fatty acid amides, ethoxylated fatty alcohols, ethoxylated alkyl phenols, and propoxylated analogues of these as well as mixed ethoxylated and propoxylated analogues of these, are present in the partial ester. It is also possible to react oligomeric or polymeric oxyalkylenediols with at least two carbon atoms in the alkylene group with diacids, thereby converting the hydroxyl groups to acid groups which can the be reacted with epoxide-functional oligomers or polymers to form molecules having hydrophilic portions derived from the polyoxyalkylene diol and hydrophobic portions derived from the epoxide-functional oligomers or polymers. Particularly good emulsifying properties are obtained when using low to intermediate molar mass epoxy resins as epoxide-functional oligomers or polymers.

Anionic emulsifiers which can be used for this invention are preferably selected from the group consisting of fatty acid salts, alkanolsulphates, fatty alcohol isethionates, alkali alkanesulphonates, alkylbenzene sulphonates, sulphosuccinic acid esters, alkanol ethoxylate-sulphates, and alkanol ethoxylate-phosphates. Cationic emulsifiers which can be used for this invention are tetraalkyl ammonium halogenides where at least one of the alkyl groups has from eight to forty carbon atoms, while the others preferably have from one to eight carbon atoms, quaternary carboxymethylated ammonium salts, and long chain alkyl substituted pyridinium salts such as lauryl pyridinium chloride. Preferred are combinations of anionic and non-ionic emulsifiers, and combinations of cationic and non-ionic emulsifiers.

Non-ionic emulsifiers are preferably selected from those comprising polyoxyalkylene moieties having two or three carbon atoms in the alkylene group or combinations thereof. Examples of such emulsifiers are block co-polymers of ethylene oxide and propylene oxide.

Non-ionic emulsifiers F are preferably selected from those having a weight average molar mass $M_w$ of at least 3000 g/mol, more preferably of at least 6000 g/mol, and most preferably of at least 10000 g/mol.

If nonionic emulsifiers are used alone, particularly preferred are non-ionic emulsifiers made by reaction of low molar mass epoxy resins which are preferably derived from bisphenol A or bisphenol F or bisphenol S or their mixtures, preferably having two epoxide groups per molecule, and from one to ten repeating units, and dihydroxy polyoxyalkylenes having two or three carbon atoms in the alkylene group, viz., dihydroxy polyoxyethylene or dihydroxy polyoxypropylene, or dihydroxy-copolymers having both $C_2$- and $C_3$-alkylene groups in their polymer chain. This reaction is preferably catalysed by a Lewis acid such as boron trifluoride, or complexes of boron trifluoride with Lewis bases such as with ammonia or trimethylamine. A preferred catalyst is made by reacting bisphenol A diglycidylether with dihydroxy polyoxyethylene where the latter has a number average molar mass of from 1 kg/mol to 20 kg/mol, particularly preferred of from 2 kg/mol to 10 kg/mol. Mixtures of two or more different dihydroxy polyoxyalkylenes and/or mixtures of two or more different low molar mass epoxy resins may also be used.

The use of an aqueously dispersible flexibilised epoxy resin is preferred, particularly in the form of its aqueous dispersion, wherein flexibilisation is preferably made by incorporating aliphatic polyesters or polyethers into the polymer chain of the epoxide resins, such as polyesters of adipic acid and butanediol, or polyethers such as oligo- and poly-ethylene glycol, oligo- and poly-propylene glycol, and oligo- and poly-butylene glycol, as well as co-oligomers or copolymers of these. These aliphatic polyesters or polyethers are preferably incorporated into the epoxy resins by co-reacting with their glycidylester or ethers in an advancement reaction.

Coating compositions or paints based on an epoxy resin component **E** as described supra, and the hardener composition **H** of this invention can be used to form primer coatings on any substrate. They are usually formulated by adding usual additives, particularly anti-foaming agents, levelling agents, wetting agents, biocides, light and UV protection agents such as those based on hindered amines, benzophenones and benzotriazoles, and rheology modifiers such as thickeners. Pigmented coating compositions can be prepared by grinding the pigment together with a wetting agent, and optionally, further additives such as antisettling agents, as well as those additives mentioned supra, and further optionally, fillers and colourants, in the aqueous dispersion of the adduct of this invention, adding further additives such as preservatives, coalescing agents, and the epoxy resin, either in aqueous dispersion, or in liquid form, optionally together with a reactive diluent, and optionally a further amount of the aqueous dispersion of the adduct of this invention, and adjusting the mixture to the desired viscosity by addition of water. The clear-coat paints or pigmented coating compositions can be applied to the substrates e.g. by spraying, rolling, dipping, flooding, or brushing.

Two-pack coating compositions of this invention are useful on mineral substrates such as concrete, stone, and plaster, but can also be used with good success on metal substrates. They provide higher gloss and gloss retention, fast hardness development, good adhesion, and improved mechanical and chemical resistance. The primer coatings formed from the two-pack coating composition comprising the hardener **H** and the epoxy resin **E** are particularly valuable as primer coatings for base metals to minimise or prevent corrosion of these metal substrates.

It has been found in the experiments underlying the present invention that the interlayer adhesion of coating films made not from aqueously dispersed coating compositions, but from solvent-borne compositions or solventless coating compositions to a coating film prepared from the two-pack combination of epoxy resins **E** and the hardener **H** according to the present invention is improved with regard to a similar hardener that does not comprise moieties derived from the dimerised or oligomerised fatty acids **H42** in the form of beta-hydroxyesters in the polymer chain formed by the reaction to prepare hardener **H.** The invention is therefore also directed to multilayer coatings comprising a primer coating layer made from a two-pack coating composition comprising the hardener **H** and the epoxy resin **E** as detailed supra, and an adjacent layer made from the topcoat coating compositions **T** as detailed infra.

The topcoat coating compositions **T** which are not aqueously dispersed, and optionally, solvent-borne, comprise combinations of resins and adapted crosslinkers. Most resins presently used in solvent-borne, or solvent-less coating compositions have hydroxyl groups as functional groups, and appropriate crosslinkers are mostly multifunctional isocyanates, with isocyanate groups in blocked or free form, or amino resins, mainly melamine resins. The hydroxyl group-containing polymers or resins are mostly alkyd resins, or acrylic resins which also include acrylic or methacrylic copolymers, styrene being frequently used as one of the comonomers. In EP 3 085 748 A1, a fast-curing anti-corrosive system is disclosed which comprises a primer layer based on at least one epoxy resin, and at least one amine curing agent, and a topcoat layer made from at least one crosslinkable component **T1** having at least two acidic C-H protons in a molecule, referred to as "Michael donor", and at least one component **T2** referred to as "Michael acceptor" having at least two olefinically unsaturated groups in its molecule that are activated by electron-withdrawing groups.

Such top-coat coating compositions based on at least one crosslinkable component **T1** having at least two acidic C-H protons in a molecule, and at least one component **T2** having at least two olefinically unsaturated groups can preferably also be used to provide a topcoat on a primer layer made with epoxy resins **E,** and the hardener or curative **H** according to this invention. The Michael addition reaction which provides carbon-carbon bonds between the said components **T1** and **T2** is usually catalysed by a strong base **T3.** Examples of such coating compositions are disclosed in EP 2 374 836 A1 wherein a latent base catalyst is used which is a substituted carbonate salt according to the formula $X^+$ -O-CO-O-R wherein $X^+$ represents a cation, preferably a quaternary ammonium or phosphonium, and wherein R is hydrogen, or an alkyl, aryl, or aralkyl group. Other catalysts which can be used are disclosed in WO 2014/166880 A1 as detailed infra; and a dormant carbamate as disclosed in WO 2018/005077 A1 of formula $A^{n+}$ [$^-$ O - CO - N($R^1$) - $R^2$ ]$_n$ where $R^1$ and $R^2$ are independently selected from the group consisting of hydrogen and linear or branched alkyl groups with from one to twenty-two carbon atoms, and $A^{n+}$ is an n-valent cation which is not hydrogen, and n is an integer number which is one or more than one. These top-coat coating compositions show the same improvement in interlayer adhesion to the primer layer that has been found in topcoats made from solvent-borne coating compositions.

Useful oligomeric or polymeric Michael donor compounds **T1** for the topcoat coating composition used with the primers of this invention are polyesters, polyamides, polyurethanes or polyacrylates comprising activated methylene or methine groups in alpha-position to electron withdrawing groups such as carbonyl, carboxyl, carboxylate, cyano, nitro, sulfo, or sulfoxide groups. Preferred polymers comprise building blocks derived from malonic acid or acetoacetic acid are copolyesters from neopentylglycol, malonic acid, and 1,2-cyclohexanedicarboxylic acid, or copolymers from acrylic esters having hydroxy functional groups with other comonomers such as methylmethacrylate and styrene, where at least a part of the hydroxyl groups averaging to at least two of the hydroxyl groups in a molecule is esterified with acetoacetic acid.

Useful Michael acceptors **T2** are esters of acrylic acid or homologues thereof with at least difunctional linear or branched aliphatic hydroxy compounds or hydroxyether compounds having from two to twenty carbon atoms, such as diethyleneglycol diacrylate, 1,6-hexanediol diacrylate, dipropyleneglycol diacrylate, tripropyleneglycol diacrylate, trimethylolpropane triacrylate, pentaerythritol triacrylate, ditrimethylolpropane tetraacrylate, and dipentaerythritol penta-/hexaacrylate mixture.

A preferred basic catalyst **T3** as described in EP 2 374 836 A1, and further in WO 2011/124663 A1, WO 2011/124664 A1, and WO 2011/124665 A1, is a carbonate salt of the formula R-O-CO-O$^-$ M$^+$, where R is H (forming a hydrogen carbonate), or linear or branched alkyl from one to twenty carbon atoms, or aralkyl from seven to twenty-five carbon atoms, (both forming ester-carbonates), M$^+$ is an alkali cation, an earth alkali cation, an organic ammonium cation R'$_4$ N$^+$, or an organic phosphonium cation R"$_4$ P$^+$, where the groups R' and R" are linear or branched or cyclic alkyl groups having from one to ten carbon atoms, such as methyl, ethyl, isopropyl, n-butyl, 2-ethylhexyl, cyclohexyl, and stearyl, or aralkyl from seven to twenty-five carbon atoms, such as benzyl and phenethyl, and may be different from each other in one cation, such as methyltriethyl ammonium, trihexyl tetradecyl phosphonium, triisobutyl methyl phosphonium, and octadecyl trioctyl phosphonium.

Other basic catalysts that accelerate the reaction between Michael donor compounds **T1** and Michael acceptor compounds **T2** are compounds **T41** which are salts of alkali metal cations or organic ammonium cations or organic phosphonium cations, and anions which are preferably carbanions derived from cyanoacetates such as ethylcyanoacetate (pK$_a$ = 9.0), 1,3-diketones such as acetylacetone (pK$_a$ = 8.95), 1,3-cyclohexanedione (pK$_a$ = 5.3), and 5,5-dimethyl-1,3-cyclohexanedione (pK$_a$ = 5.23), and nitroalkanes such as nitromethane (pK$_a$ = 10.2), nitroethane (pK$_a$ = 8.5), and 2-nitropropane (pK$_a$ = 9.98). These can preferably be combined with one or more optional components **T42** which have one or more acidic Q-H groups wherein Q is selected from the group consisting of nitrogen, phosphorus, oxygen, sulfur, and carbon, the Q anion being a Michael addition donor reactable with component **T2,** wherein the pKa(T42) of the Q-H group in component **T42** is more than two lower than the pK$_a$(T1) of the first proton of component T1 and being lower than 10.5, and the ratio

$n$(H, T42) / $n$(C$^-$, T41) of the amount of substance of acidic Q-H groups in component **T42** to the amount of substance of the carbanion in component **T41** is between 0.01 and 50. **T42** is preferably an organic amine compound having at least one >NH group where the pK$_a$ value (negative decadic logarithm of the ionisation constant K$_a$) for the reaction

$$>N\text{-}H \; \rightleftharpoons \; >N^- + H^+$$

is between 4 and 14. These systems are disclosed in WO 2014/166880 A1. Among the preferred organic nitrogen compounds are succinimide, 1,2,4-triazole, and 1,2,3-benzotriazole.

Further constituents that can be present in topcoat coating composition **T** which crosslinks via the Michael addition are light and UV stabilisers, pigments, dispersing agents, flow modifiers, antifoaming agents, matting agents, solvents, and anti-sagging agents.

Physicochemical Parameters

In the specification, and also in the examples, the following parameters have been used to describe physicochemical properties of the compounds and substances:
The mass fraction of solids $w_s$ was determined by drying a sample B which comprises a substance which is solid at room temperature (23°C) and is dissolved in a solvent, or dispersed in an aqueous system, with the sample mass of 1 g at 125°C for one hour, and stating the ratio $w_s = m_{Rd} / m_B$ of the mass $m_{Rd}$ of the residue Rd after drying, and the mass $m_B$ of the sample B taken. Strength of a solution is stated as the mass fraction $w_B$ of solute B in the solution, calculated as ratio $m_B / m_S$ of the mass $m_B$ of solute B and the mass $m_S$ of solution S.

The specific amount of substance of epoxide groups in a sample was determined in the usual way by titration of the sample with tetraethylammonium bromide and perchloric acid in glacial acetic acid, as described by R. R. Jay, Anal. Chem. 36, (1964), pages 667 and 668, and stated as the ratio $n$(EP) / $m_B$ of the amount of substance $n$(EP) of epoxide groups present in a sample B, and the mass $m_B$ of that sample B; its customary SI unit is "mol/kg".

The acid number or acid value is defined, according to DIN EN ISO 3682 (DIN 53 402), as the ratio $m_{KOH} / m_B$ of that mass $m_{KOH}$ of potassium hydroxide which is needed to neutralise the sample B under examination, and the mass $m_B$ of this sample B, or the mass $m_B$ of the solids in the sample in the case of a solution or dispersion; its customary unit is "mg/g".

The amine number or amine value is defined, according to DIN EN ISO 3771 (DIN 16 945, item 5.6; DIN 53 176) as the ratio $w_{Am} = m_{KOH} / m_B$ of that mass $m_{KOH}$ of potassium hydroxide which needs the same amount of acid for neutralisation as the sample B under examination, and the mass $m_B$ of this sample B, or the mass $m_B$ of the solids in the sample in the case of a solution or dispersion; its customary unit is "mg/g". The specific amount of substance of aminic hydrogen groups in a dispersion, $n(NH)/m$, is calculated from the titration results by dividing the amount of substance of aminic hydrogen atoms, $n(NH)$, (i. e., two from each of the primary amino groups, and one from each of the secondary amino groups) by the mass $m$ of the dispersion.

Dynamic viscosity of the dispersion was measured in a cone-and-plate rheometer at 23°C and a shear rate of $100\ s^{-1}$.

The invention is further illustrated by the following examples.

### Example 1 Preparation of a Ketimine K1

1030 g (10.0 mol) of diethylene triamine (DETA) and 3000 g (30 mol) of methylisobutyl ketone (MIBK) were charged into a four-necked flask equipped with a mechanical stirrer, a water separator and a gas inlet and heated to reflux under a slight nitrogen flow. When the desired amount of water had been collected after approximately eight hours (360 g = 20.0 mol of water), the excess of MIBK was removed to yield the pure DETA-MIBK-ketimine.

### Example 2 Preparation of the Emulsifier E1

2546 g (6.7 mol) of bisphenol A diglycidyl ether (BADGE), 450 g (0.3 mol) of polyethylene glycol with an average molar mass of 1500 g/mol, and 941 g of methoxypropanol were charged into a four-necked flask equipped with a mechanical stirrer and heated to 100°C under stirring. When this temperature was reached, 3 g of a borontrifluoride ethylamine complex (

$$BF_3 \text{\textcircled{e}} C_2H_5\text{-}NH_2$$

) were charged into the flask and the mixture was heated to 130 °C and maintained at this temperature for two hours until a specific content of epoxide groups of 3.24 mol/kg was reached. All hydroxyl groups of the polyethylene glycol had been consumed in this reaction.

### Example 3 Preparation of the Epoxy-Amine Adduct A1 (comparative)

The reaction mixture of Example 2 was cooled to 100°C, and 776 g (3.406 mol) of bisphenol A and 3 g of triphenylphosphine were charged into the reaction flask and subjected to an advancement reaction, wherein the reaction mixture was heated again under stirring to 130°C, and was kept at this temperature for two hours until the specific content of epoxide groups in the reaction mixture had reached 1.27 mol/kg. Then, further 380 g of methoxypropanol were added, and the reaction mixture was cooled to 80°C. At this temperature, 1335 g of the ketimine K1 of Example 1 were added, and the mixture was stirred for twenty minutes. The mixture was then heated to 90°C, 84 g of diethanolamine were added under stirring, and the mixture was held for twenty minutes at 90°C. 10.2 g of dimethylamino-propylamine were then added, and the reaction mixture was heated to 100°C and stirred for two hours. 95 g of BADGE were added to scavenge unreacted free amines, and the mixture was stirred at 100°C for one further hour. After cooling to room temperature (23°C), the mass fraction of solids was determined to be 80 %, and the dynamic viscosity measured at 23°C and a shear rate of $25\ s^{-1}$ was 5000 mPaws.

### Example 4 Preparation of the Epoxy-Amine Adducts A2 to A4 (according to the Invention)

Example 2 was repeated to prepare the epoxy-amine adducts A2 to A4, where instead of bisphenol A alone, mixtures of bisphenol A and of a dimer fatty acid mixture (Pripol® 1017, Croda International Plc) were used in the preparation of adducts A2 and A3, and the dimer fatty acid mixture alone were used in the preparation of adduct A4, according to the data in the following table 1. The reaction mixture was then subjected to an advancement reaction by heating again under stirring to 130°C, and was kept at this temperature for two hours until the specific content of epoxide groups in the reaction mixture had reached indicated in table 1. m(AP) stands for the mass of solids of the advancement product in the reaction solution.

Table 1 Additions to the Emulsifier of Example 2 in Preparation of the Epoxy-Amine Adducts A2 to A4, and characteristic value (according to the Invention)

| Epoxy-Amine Adduct | | unit | A2 | A3 | A4 |
|---|---|---|---|---|---|
| mass of bisphenol A | $m$(BPA) | g | 613 | 449 | 0 |
| mass of dimer fatty acid | $m$(DFA) | g | 275.4 | 551.25 | 1308 |
| specific amount of epoxide groups after the advancement reaction | $n$(EP) / $m$(AP) | mol/kg | 1.24 | 1.21 | 1.35 |

Then, for each of A2, A3, and A4, further 380 g of methoxypropanol were added, and the reaction mixture was cooled to 80°C. At this temperature, 1335 g of the ketimine K1 of Example 1 were added, and the mixture was stirred for twenty minutes. The mixture was then heated to 90°C, 84 g of diethanolamine were added under stirring, and the mixture was held for twenty minutes at 90°C. 10.2 g of 3-dimethylamino-1-propylamine were then added, and the reaction mixture was heated to 100°C and stirred for two hours. 95 g of BADGE were added to scavenge unreacted free amines, and the mixture was stirred at 100°C for one further hour. After cooling to room temperature (23°C), the mass fraction of solids $w_{sol} = m_{sol} / m$ in the solution of the epoxy-amine adduct was determined, $m$ being the mass of that solution, as well as the specific amount of substance of beta-hydroxyester groups, $n(\beta HE) / m_{sol}$, based on the mass of solids $m_{sol}$ in the epoxy-amine adduct, see table 2.

Table 2 Characteristic values for the epoxy-amine adducts A2 to A4

| Epoxy-Amine Adduct | | unit | A2 | A3 | A4 |
|---|---|---|---|---|---|
| mass fraction of solids | $w$(solids) | cg/g = % | 80.4 | 80.7 | 81.5 |
| specific amount of beta-hydroxyester groups in the mass of solids of the epoxy-amine adduct | $n(\beta HE) / m_{sol}$ | mol/kg | 0.314 | 0.613 | 1.150 |

## Example 5 Preparation of Hardener Dispersions D1 to D4

Hardener dispersions were prepared from the epoxy-amine adduct A1, A2, A3, and A4 according to the recipe given in table 3:

Table 3 Preparation and Characteristics of Hardener Dispersions D1 to D4

| | Hardener Dispersion | | D1 | D2 | D3 | D4 |
|---|---|---|---|---|---|---|
| | Epoxy-Amine Adduct Ai | | A1 | A2 | A3 | A4 |
| Formulation | Mass of Epoxy-Amine Adduct Ai | $m$(Ai) / g | 662.0 | 673.2 | 684.4 | 715.2 |
| | Lactic Acid [1] | $m$(LA) / g | 429 | 429 | 429 | 429 |
| | Water I | $m$(WI) / g | 6700 | 6700 | 6700 | 6700 |
| | Reactive Diluent | $m$(RD) / g | 821 | 821 | 821 | 821 |
| | Water II | $m$(WII) / g | 1500 | 300 | 400 | 500 |

(continued)

| | Hardener Dispersion | | D1 | D2 | D3 | D4 |
|---|---|---|---|---|---|---|
| | Epoxy-Amine Adduct Ai | | A1 | A2 | A3 | A4 |
| Data | median of particle size [2] | nm | 150 | 96 | 128 | 184 |
| | mass fraction of solids [3] | $w$sol / % | 35.0 | 40.2 | 40.6 | 39.8 |
| | specific amount of aminic hydrogen groups [4] | $n_s$ (NH) / mol·kg$^{-1}$ | 0.88 | 0.99 | 0.97 | 0.89 |
| | dynamic viscosity [5] of the dispersion D | $\eta_D$ / mPa·s | 20 | 171 | 145 | 170 |

1: aqueous solution of lactic acid having a mass fraction of lactic acid of 50 %
2: determined by dynamic laser scattering according to ISO 22412
3: see definition of physicochemical properties supra
4: see definition of physicochemical properties supra; the specific amount of substance of aminic hydrogen atoms in a dispersion is calculated as $n_s$ (NH) = $n$(NH) / $m_D$ where $n$(NH) is the amount of substance of aminic hydrogen atoms present in the dispersion, and $m_D$ is the mass of the dispersion
5: see definition of physicochemical properties supra

The mass as stated in table 3 of epoxy-amine adducts A1 from example 3 and A2 to A4 of example 4 were separately heated to 95°C and neutralised each with 429 g of a 50 % strength solution of lactic acid in water followed by the addition of 6700 g of water as the first portion ("water I"). The solvents methoxypropanol and MIBK which latter was split off in the cleavage of the ketimine were distilled off under reduced pressure of 100 hPa at 60 °C. When the distillation of solvent had ceased, 821 g of cresyl glycidyl ether as reactive diluent ("RD") were added to the dispersion, and the mixture was stirred for two hours. The mass fraction of solids of the dispersion was adjusted by addition of a further portion of water ("water II") to 35 % (dispersion D1) and 40 % (dispersions D2, D3, and D4). The median of the particle size distribution was determined by dynamic light scattering using a "Zetasizer nano" (Malvern Instruments Ltd.). The other characteristics were determined as explained supra. Hardener dispersions D2 to D4 are according to the invention, and D1 is a comparative example.

**Example 6 Preparation of Pigmented Primer Coating Compositions**

A pigment paste was prepared according to the following recipe:
88.5 g of deionised water were charged whereto 30 g of a nonionic polymeric wetting and dispersing agent (Additol® VXW 6208/60, Allnex Austria GmbH), and 2.5 g of a mineral oil based, silicon-free defoamer (Additol® VXW 6393, Allnex Austria GmbH) were added and mixed. To this mixture, the following components were added in the sequence stated: 57.5 g of a natural mixture of corpuscular silica and lamellar kaolinite (Silitin® Z 89, Hoffmann Mineral GmbH), 223.5 g of a rutile type titanium dioxide pigment (Kronos® 2190, Kronos International Inc.), 6.0 g of a yellow iron oxide pigment based on $\alpha$-FeO(OH), Pigment Yellow 42 (Bayferrox® 3290, Lanxess Deutschland GmbH), 12. 5 g of a black iron oxide pigment based on $Fe_3O_4$, Pigment black 11 (Bayferrox® 306, Lanxess Deutschland GmbH), and 192 g of a white baryte mineral with low calcium carbonate and silicate content and a brightness $R_y$ of 92 (EWO, Sachtleben Minerals GmbH & Co. KG, distributed by Krahn Chemie). The mixture was homogenised after each addition and then transferred to a bead mill and ground for about thirty minutes. The following further components were then added in the sequence indicated: 2.5 g of the mineral oil based, silicon-free defoamer as supra, 6.5 g of a coalescence agent (2,2,4-trimethylpentane-1,3-diol monoisobutyrate, Texanol®, Eastman Chemical), 5.0 g of a urethane-modified polyether thickener (Additol® VXW 6388, Allnex Austria GmbH), and 2.5 g of a polyether modified polysiloxane substrate wetting agent (Additol® 6503N, Allnex Austria GmbH), this mixture was homogenised to a paste P, and pastes P1 to P4 were then completed by adding the masses of the dispersions D1 to D4 as listed in table 4:

Table 4 Pigmented Pastes P1 to P4

| Pigmented Paste | P1 | P2 | P3 | P4 |
|---|---|---|---|---|
| Mass of Paste P | 629 g | 629 g | 629 g | 629 g |
| Dispersion | D1 | D2 | D3 | D4 |
| Mass of Dispersion | 364.8 g | 324.2 g | 330.9 g | 360.7 g |

Shortly before application, 494.5 g each of an aqueous, internally plasticised type 1 epoxide dispersion having a mass fraction of solids of 52 % and a specific amount of substance of epoxide group in the dispersion of 1 mol/kg (Beckopox® EP 387w/52WA, Allnex Germany GmbH) was admixed to the different pigmented pastes to form the primer coating compositions PCC1 to PCC4 which were adjusted to the required viscosity by addition of deionised water, and well mixed before applying.

**Example 7 Adhesion Test on Cold Rolled Steel Sheets**

Primer coating compositions PCC1 to PCC4 as prepared in Example 6 were applied to untreated cold rolled steel sheets (Gardobond® OC), and after flush-off at room temperature for ten minutes, the coated sheets were dried for twenty minutes at 80°C in an oven, and then left for at 23°C and 50 % of relative humidity for one day, seven days, and fourteen days for pst-curing. The dry film thickness of the primer coating was 65 $\mu$m (0.065 mm). These sheets were subjected after the time intervals mentioned to a cross-hatch test according to DIN EN ISO 2409 after post-curing, with removal of loose particles using an adhesive tape, where the following results were obtained:

Table 5Cross-Hatch Adhesion Test for Primer Coating onto Cold Rolled Steel Sheets

| Primer Coating Composition | PCC1 (comparative) | PCC2 | PCC3 | PCC4 |
|---|---|---|---|---|
| after 1 d | GT5 | GT3 | GT1 ... GT2 | GT0 |
| after 7 d | GT5 | GT1 | GT0 | GT0 |
| after 14 d | GT5 | GT0 | GT0 | GT0 |

The GT values were determined in accordance with DIN EN ISO 2409.

As can be seen, after fourteen days of post-cure storage, all inventive primer coating compositions showed good adhesion to the steel substrate, while the comparative example (PCC1, without addition of dimer fatty acid in the advancement step) showed bad adhesion regardless of the post-cure time. A higher amount of dimer fatty acids used in the advancement step accelerates the adhesion of the coating layer to the steel sheet.

**Example 8a Inter-Layer Adhesion Test with a Solvent-Borne Pigmented Top-Coat**

A pigmented topcoat based on Michael Addition crosslinking was prepared according to the following recipe:

8a - 1 Preparation of malonated polyester MPE1

MPE1 was prepared as follows: Into a reactor provided with a distilling column filled with Raschig rings were brought 382 g of neopentyl glycol (M = 104.15 g/mol; 3.668 mol), 262.8 g of hexahydrophthalic anhydride (M = 154.16 g/mol; 1.705 mol) and 0.2 g of butyl stannoic acid (Bu-Sn(O) OH; Fascat® 4100, PMC Vlissingen B.V.). The mixture was polymerised at 240 °C under nitrogen to an acid value of less than 1 mg/g. The mixture was cooled down to 130°C and 355 g of diethylmalonate (M = 160.168 g/mol; 2.216 mol) were added. The reaction mixture was heated to 170°C and ethanol was removed under reduced pressure. The resin was subsequently cooled and diluted with butyl acetate to a mass fraction of solids of 85 %, to yield a material with an OH value of 16 mg/g, GPC $M_n$ = 1750 g/mol and a specific amount of substance of activated $CH_2$ groups of 2.86 mol/kg, and a specific amount of substance of acidic CH groups of 5.71 mol/kg (malonate equivalent weight of 350 g/Eq; active C-H EQW = 175 g/Eq).

8a - 2 Preparation of malonated polyester MPE2

MPE2 was prepared as follows: Into a reactor provided with a distilling column filled with Raschig rings were brought 382 g of neopentyl glycol, 262.8 g of hexahydrophthalic anhydride and 0.2 g of butyl stannoic acid. The mixture was polymerised at 240°C under nitrogen to an acid value of less than 1 mg/g. The mixture was cooled down to 130°C and 355 g of diethylmalonate were added. The reaction mixture was heated to 170°C and ethanol was removed under reduced pressure. When the viscosity at 100°C reached 0.5 Paws, the material was cooled down to 140°C and 11.2 g of solid succinimide were added. This mixture was stirred until all succinimide was dissolved. The resin was further cooled and diluted with butyl acetate to a mass fraction of solids of 85 %.

8a - 3 Composition of catalyst C

For the preparation of Catalyst C, 43.7 g of aqueous tetrabutylammoniun hydroxide (aqueous solution with a mass fraction of the base of 55 %), 19.7 g of diethyl carbonate, 31.8 g of n-propanol and 4.8 g of water were mixed.

8a - 4 Preparation and application of a pigmented topcoat coating formulation

146.4 g of MPE1, 167.5 g of MPE2, 19.9 g of 1,2,4-triazole (solution in n-propanol with a mass fraction of solids of 15 %), 1.9 g of a substrate wetting and levelling agent for solvent-borne coatings based on a silicone acrylate copolymer (BYK® 3550, solution with a mass fraction of solids of 52 %, dissolved in methoxypropylacetate) and 4.3 g of a sterically hindered amine light stabiliser (mixture of bis-(1,2,2,6,6-pentamethyl-4-piperidyl) sebacate and methyl, (1,2,2,6,6-pentamethyl-4-piperidyl) sebacate, commercially available as Tinuvin® 292 from BASF SE) were mixed with 616.9 g of a previously prepared mill base containing 166.4 g of ditrimethylolpropane tetraacrylate (DiTMPTA), 19.4 g of a wetting and dispersing additive (solution of a polyurethane block copolymer having pigment affinic groups in 2-methoxy-1-methylethylacetate, mass fraction of solids ca. 52 %, commercially available as DISPERBYK® 2150 from BYK Chemie GmbH) and 431.1 g of a surface-treated rutile type titanium dioxide white pigment (commercially available as Kronos® 2310 from Kronos BV). After obtaining a homogeneous mixture, 23.3 g of catalyst C were added and mixed in. Coating formulations were drawn down or spray applied onto the steel sheets of example 7 coated with the WB epoxy primer compositions to obtain a dry layer thickness of from 50 $\mu$m to 70 $\mu$m onto the steel sheets of Example 7 which were coated with the primer coating compositions PCC1 to PCC4, respectively, and post-cured for seven days at 23°C and 50 % relative humidity.

Interlayer adhesion was tested according to DIN EN ISO 2409 as described supra, after twenty-four hours, seven days, and fourteen days of rest at room temperature (23°C) and 50 % of relative humidity. The results are collected in table 6:

Table 6 Cross-Hatch Adhesion Test for Intercoating Adhesion

| Primer Coating Composition | PCC1 (comparative) | PCC2 | PCC3 | PCC4 |
|---|---|---|---|---|
| Top Coating Composition | as described supra in Example 8a | | | |
| after 1 d | GT4 | GT0 | GT0 | GT0 |
| after 7 d | GT2 | GT0 | GT0 | GT0 |
| after 14 d | GT1 | GT0 | GT0 | GT0 |

**Example 8b Inter-Layer Adhesion Test with a Solvent-Borne Pigmented Top-Coat**

A further pigmented topcoat based on Michael Addition crosslinking was prepared according to Example 17 of WO 2014/166 880 A1. A pigment dispersion was prepared by charging 125.28 g of a rutile titanium dioxide pigment (Kronos International Inc., Kronos® 2310), 3.77 g of a wetting and dispersing additive based on a block copolymer having aminic pigment affinic groups, with an amine value $w_{Am}$ of 10 mg/g, dissolved in a mixture of xylene, butylacetate, and methoxypropylacetate in a mass ratio of 3:1:1, to yield a solution having a mass fraction of solids of 45 % (Byk Additives and Instruments, DISPERBYK® 163), 59.62 g of ditrimethylolpropane tetraacrylate (Sartomer subsidiary of Arkema; Sartomer® SR 355), and 100 g of a malonate polyester resin having an acid value of 0.3 mg/g, a hydroxyl value of 20 mg/g, and a mass average molar mass of 3400 g/mol, measured on a THF solution via gel permeation chromatography, using a calibration with polystyrene samples. After milling in a bead mill with glass beads, for thirty minutes, further 8.51 g of ditrimethylolpropane tetraacrylate as above, 0.92 g of a mixture of a solution of (a) a mass fraction of 25 % of a polyester-modified polydimethylsiloxane in a mixture of xylene isomers and ethyl benzene in a mass ratio of about 3:1 (Byk Additives and Instruments, BYK® 310) and (b) a mass fraction of 25 % of a polyester-modified polymethylalkyl siloxane in a mixture of equal masses of methoxypropyl acetate and phenoxyethanol (Byk Additives and Instruments, BYK® 315N), 0.87 g of 1H-1,2,3-benzotriazole, 0.31 g of succinimide, 14.69 g of n-propanol, and 13.50 g of ethanol were added to the pigmented mixture, and homogenised well. Finally, 17.71 g of a solution of an amount of substance of 0.125 mol of the potassium salt of 1H-1,2,3-benzotriazol in 63 g of ethanol as basic catalyst were admixed, and the resulting paint was sprayed onto the steel sheets of Example 7 which were coated with the primer coating compositions PCC1 to PCC4, respectively, after post-curing for seven days at 23°C and 50 % relative humidity, within five minutes after addition of the basic catalyst solution. The painted slabs were dried for sixty minutes at ambient temperature (25°C), whereafter the dry film thickness of the top coat was determined to be 55 $\mu$m (0.055 mm) and tested for intercoat adhesion according to DIN EN ISO 2409 as described supra, after twenty-four hours, seven days, and fourteen days of rest at room temperature (23°C) and 50 % of relative humidity. The results are collected in table 7.

Table 7Cross-Hatch Adhesion Test for Intercoating Adhesion

| Primer Coating Composition | PCC1 (comparative) | PCC2 | PCC3 | PCC4 |
|---|---|---|---|---|
| Top Coating Composition | as described supra in Example 8b | | | |
| after 1 d | GT4 | GT0 | GT0 | GT0 |
| after 7 d | GT2 | GT0 | GT0 | GT0 |
| after 14 d | GT1 | GT0 | GT0 | GT0 |

As can be seen, for all of the primer coating compositions according to the invention (PCC2 to PCC4), no lack of adhesion was found in both Examples 8a and 8b. In the comparative example using primer coating composition PCC1, prolonged post-curing (fourteen days) improved the intercoat adhesion, yet there were still loose particles of the coating film at the intersections of the cuts. The total uncovered area after removal of loose particles with adhesive tape accounted for not more than 5 % of the cross-cut area.

## Claims

1. A hardener composition **H** for an aqueous epoxy resin based two-pack coating formulation wherein the hardener composition **H** comprises reaction products of

   - at least difunctional epoxides **H1,**
   - at least difunctional hydroxypolyoxyalkylenes **H2,**
   - optionally, at least difunctional hydroxyaromatic compounds **H3,**
   - unsaturated fatty acids **H42** having a carboxyl functionality of more than one which comprise the so-called dimer fatty acids,
   - secondary amines **H5** having additional carbonylimine-blocked primary amino groups, obtained by reaction of amines **H51** having at least one, preferably at least two primary amino groups and at least one secondary amino group with carbonyl compounds **H52** which have an aldehyde or ketone carbonyl group, and at least one, preferably both of

      - hydroxy-functional secondary amines **H6** having at least one secondary amino group and at least one hydroxyl group, and
      - amines **H7** having at least one primary, and at least one tertiary amino group,

   wherein the unsaturated fatty acids **H42** are incorporated into the hardener in the form of beta-hydroxy esters, the specific amount of substance of beta-hydroxyester groups derived from unsaturated fatty acids **H42,** based on the mass of solids in the hardener **H,** being from 0.2 mol/kg to 2 mol/kg, and wherein water is added to these reaction products of **H1, H2, H3, H42, H5, H6,** and **H7** to decompose the carbonylimines which are ketimines or aldimines, and to liberate the primary amino groups to form the hardener composition **H.**

2. The hardener composition of claim 1 wherein the specific amount of substance of beta-hydroxyester groups derived from unsaturated fatty acids **H42,** based on the mass of solids in the hardener **H,** is from 0.25 mol/kg to 1.5 mol/kg.

3. The hardener composition of any of claims 1 or 2 wherein the at least difunctional epoxides **H1** are glycidyl esters of at least difunctional acid compounds **H11,** or glycidyl ethers of at least difunctional hydroxy compounds **H12,** wherein these said acid compounds **H11** are aromatic or aliphatic carboxylic acids having up to forty carbon atoms and are preferably selected from the group consisting of terephthalic acid, isophthalic acid, adipic acid, dodecanedioic acid, and cyclohexane dicarboxylic acid, and these said hydroxy compounds **H12** are aromatic or aliphatic compounds having at least two hydroxyl groups and up to forty carbon atoms per molecule, and are preferably selected from the group consisting of hexane diol, dihydroxycyclohexane, oligomeric or polymeric oxyalkylenediols, particularly those derived from hydroquinone, resorcinol, 4,4'-dihydroxydiphenyl, 4,4'-dihydroxydiphenylsulfone, 4,4'-dihydroxybenzophenone, 4,4'-dihydroxydiphenylmethane, 2,2-(4,4'-dihydroxydiphenyl)propane, or from low molar mass or oligomeric novolaks based on phenol, and/or cresol isomers.

4. The hardener composition of any of claims 1 to 3 wherein the at least difunctional hydroxypolyoxyalkylenes **H2** are selected from the group consisting of polyoxyethylene diols having a mass average molar mass of from 1000 g/mol to 10 000 g/mol.

5. The hardener composition of any of claims 1 to 4 wherein the at least difunctional hydroxyaromatic compounds **H3** are selected from the group consisting of bisphenol A, bisphenol F, and mixtures thereof.

6. The hardener composition of any of claims 1 to 5 wherein the unsaturated fatty acids **H42** having a carboxyl functionality of more one are dimer fatty acids derived from tall oil.

7. The hardener composition of any of claims 1 to 6 wherein the secondary amines **H5** having additional carbonylimine-blocked primary amino groups are obtained by reaction of amines **H51** having two primary amino groups and at least one secondary amino group which are selected from the group consisting of diethylenetriamine, triethylene tetramine, tetraethylenepentamine, dipropylenetriamine, tripropylene tetramine, tetrapropylene-pentamine, dibutylenetriamine, tributylene tetramine, and tetrabutylenepentamine, with carbonyl compounds **H52** which have a ketone carbonyl group, and which are selected from the group consisting of acetone, methylethyl ketone, diethylketone, methylpropyl ketone, and methylisobutyl ketone.

8. The hardener composition of any of claims 1 to 7 wherein the hydroxy-functional secondary amines **H6** having at least one secondary amino group and at least one hydroxyl group used in the reaction to form hardener **H** are selected from the group consisting of diethanolamine, N-methylethanolamine, dipropanolamine, diisopropanolamine, N-methylpropanolamine, N-methylisopropanolamine, dibutanolamine, N-ethylethanolamine and 4-hydroxypiperidine.

9. The hardener composition of any of claims 1 to 8 wherein the amines **H7** having at least one primary, and at least one tertiary amino group used in the reaction to form hardener **H** are selected from the group consisting of N,N-dimethylaminoethylamine, N,N-diethylaminoethylamine, N,N-dimethylaminopropylamine, and N,N-diethylaminopropylamine.

10. The hardener composition of claim 9 wherein the hydroxy-functional secondary amines **H6** are also used, and are selected from amines having at least one secondary amino group and at least one hydroxyl group used in the reaction to form hardener **H** are selected from the group consisting of diethanolamine, N-methylethanolamine, dipropanolamine, diisopropanolamine, N-methylpropanolamine, N-methylisopropanolamine, and 4-hydroxypiperidine.

11. A process for the preparation of the hardener composition **H** of any of claims 1 to 10, comprising the steps of:

(a) preparation of a hydrophilically modified epoxy resin by reacting an at least difunctional hydroxypolyoxyalkylene **H2** and an at least difunctional epoxide **H1** in the presence of an acidic catalyst **K1,** under heating up to 200°C,
(b) preparing, in a separate reaction, an imine from an aliphatic amine **H51** having at least one primary amino group, and at least one secondary amino group in its molecule, and a blocking agent **H52** for primary amino groups, which blocking agent has preferably carbonyl groups of a ketone or of an aldehyde, to form an imine **H5** which is a ketimine or an aldimine,
(c) adding to the product of step (a), unsaturated fatty acids **H42** having a carboxyl functionality of more than one, a catalyst, and optionally, hydroxyaromatic compounds **H3,** in the reaction of which a part of the epoxide groups is consumed, adding the product **H5** from step (b) and reacting until the secondary amino groups of **H5** have been consumed,
(d) optionally, adding secondary hydroxyamines **H6,** and maintaining the reaction until all secondary amino groups of **H6** have been consumed,
(e) optionally, adding primary-tertiary amines **H7,** and conducting the reaction until all epoxide groups have been consumed,

wherein either or both of steps (d) and (e) are performed, in any sequence,

(f) optionally, adding further diepoxides **H1** to consume all remaining amino groups,
(g) neutralising the reaction product of step (c), (d), (e) or (f) by addition of an organic or inorganic acid, and adding water to the neutralised mixture to decompose the ketimine groups, under regeneration of primary amino groups, and of the blocking agent which is then distilled off.

12. A process for the preparation of an aqueous two-pack coating composition comprising adding to the hardener composition **H** of any of claims 1 to 10 an epoxy resin E having functional epoxide groups.

13. The process of claim 12 wherein the epoxy resin E is a flexibilised aqueously dispersible epoxy resin.

14. A method of use of the aqueous two-pack coating composition prepared by the process of any of claims 12 or 13 in the application of a multi-layer coating comprising coating a substrate with the aqueous two-pack coating composition prepared by the process of any of claims 12 or 13 to form a first coating, and applying a second layer onto the said first coating using a solvent-borne or solventless topcoat coating composition.

15. The method of claim 14 wherein the topcoat coating composition is a system which cures by Michael addition.

**Patentansprüche**

1. Härtungsmittelzusammensetzung **H** für eine auf wässerigem Epoxidharz basierende Zweikomponenten-Beschichtungsformulierung, wobei die Härtungsmittelzusammensetzung **H** Reaktionsprodukte von

- zumindest difunktionellen Epoxiden **H1,**
- zumindest difunktionellen Hydroxypolyoxyalkylenen **H2,**
- gegebenenfalls zumindest difunktionellen hydroxyaromatischen Verbindungen **H3,**
- ungesättigten Fettsäuren **H42** mit einer Carboxylfunktionalität von mehr als eins, die sogenannte dimere Fettsäuren umfassen,
- sekundären Aminen **H5** mit zusätzlichen Carbonylimin-blockierten primären Aminogruppen, erhalten durch die Umsetzung von Aminen **H51** mit mindestens einer, vorzugsweise mindestens zwei primären Aminogruppen und mindestens einer sekundären Aminogruppe mit Carbonylverbindungen **H52,** die eine Aldehyd- oder Ketoncarbonylgruppe aufweisen, und mindestens einem, vorzugsweise beidem von

- hydroxyfunktionellen sekundären Aminen **H6** mit mindestens einer sekundären Aminogruppe und mindestens einer Hydroxylgruppe und
- Aminen **H7** mit mindestens einer primären und mindestens einer tertiären Aminogruppe

umfasst,
wobei die ungesättigten Fettsäuren **H42** in das Härtungsmittel in Form von Betahydroxyestern eingebracht werden, wobei die spezifische Stoffmenge an Betahydroxyestergruppen, die von ungesättigten Fettsäuren **H42** abgeleitet sind, basierend auf der Masse an Feststoffen in dem Härtungsmittel **H,** 0,2 mol/kg bis 2 mol/kg beträgt, und wobei diesen Reaktionsprodukten von **H1, H2, H3, H42, H5, H6** und **H7** Wasser zugegeben wird, um die Carbonylimine, die Ketimine oder Aldimine sind, zu zersetzten und die primären Aminogruppen unter Bildung der Härtungsmittelzusammensetzung H freizusetzen.

2. Härtungsmittelzusammensetzung nach Anspruch 1, wobei die spezifische Stoffmenge an Betahydroxyestergruppen, die von ungesättigten Fettsäuren **H42** abgeleitet sind, basierend auf der Masse an Feststoffen in dem Härtungsmittel **H,** 0,25 mol/kg bis 1,5 mol/kg beträgt.

3. Härtungsmittelzusammensetzung nach einem der Ansprüche 1 oder 2, wobei die zumindest difunktionellen Epoxide **H1** Glycidylester von zumindest difunktionellen Säureverbindungen **H11** oder Glycidylether von zumindest difunktionellen Hydroxyverbindungen **H12** sind, wobei diese Säureverbindungen **H11** aromatische oder aliphatische Carbonsäuren mit bis zu vierzig Kohlenstoffatomen sind und vorzugsweise aus der Gruppe ausgewählt sind, die aus Terephthalsäure, Isophthalsäure, Adipinsäure, Dodecandisäure und Cyclohexandicarbonsäure besteht, und die Hydroxyverbindungen **H12** aromatische oder aliphatische Verbindungen mit mindestens zwei Hydroxylgruppen und bis zu vierzig Kohlenstoffatomen pro Molekül sind und vorzugsweise aus der Gruppe ausgewählt sind, die aus Hexandiol, Dihydroxycyclohexan, oligomeren oder polymeren Oxyalkylendiolen besteht, insbesondere denen, die von Hydrochinon, Resorcinol, 4,4'-Dihydroxydiphenyl, 4,4'-Dihydroxydiphenylsulfon, 4,4'-Dihydroxybenzophenon, 4,4'-Dihydroxydiphenylmethan, 2,2-(4,4'-Dihydroxydiphenyl)propan oder von Novolaken mit geringer Molmasse oder oligomeren Novolaken, die auf Phenol basieren, und/oder Kresolisomeren abgeleitet sind.

4. Härtungsmittelzusammensetzung nach einem der Ansprüche 1 bis 3, wobei die zumindest difunktionellen Hydroxypolyoxyalkylene **H2** aus der Gruppe ausgewählt sind, die aus Polyoxyethylendiolen mit einer massenmittleren Molmasse von 1.000 g/mol bis 10.000 g/mol besteht.

5. Härtungsmittelzusammensetzung nach einem der Ansprüche 1 bis 4, wobei die zumindest difunktionellen hydroxyaromatischen Verbindungen **H3** aus der Gruppe ausgewählt sind, die aus Bisphenol A, Bisphenol F und Gemischen davon besteht.

6. Härtungsmittelzusammensetzung nach einem der Ansprüche 1 bis 5, wobei die ungesättigten Fettsäuren **H42** mit einer Carboxylfunktionalität von mehr als eins dimere Fettsäuren sind, die von Tallöl abgeleitet sind.

7. Härtungsmittelzusammensetzung nach einem der Ansprüche 1 bis 6, wobei die sekundären Amine **H5** mit zusätzlichen Carbonylimin-blockierten primären Aminogruppen durch die Umsetzung von Aminen **H51,** die zwei primäre Aminogruppen und mindestens eine sekundäre Aminogruppe aufweisen, die aus der Gruppe ausgewählt sind, die aus Diethylentriamin, Triethylentetramin, Tetraethylenpentamin, Dipropylentriamin, Tripropylentetramin, Tetrapropylenpentamin, Dibutylentriamin, Tributylentetramin und Tetrabutylenpentamin besteht, mit Carbonylverbindungen **H52,** die eine Ketoncarbonylgruppe aufweisen und die aus der Gruppe ausgewählt sind, die aus Aceton, Methylethylketon, Diethylketon, Methylpropylketon und Methylisobutylketon besteht, erhalten werden.

8. Härtungsmittelzusammensetzung nach einem der Ansprüche 1 bis 7, wobei die hydroxyfunktionellen sekundären Amine **H6** mit mindestens einer sekundären Aminogruppe und mindestens einer Hydroxylgruppe, die bei der Umsetzung zur Bildung des Härtungsmittels **H** verwendet werden, aus der Gruppe ausgewählt sind, die aus Diethanolamin, N-Methylethanolamin, Dipropanolamin, Diisopropanolamin, N-Methylpropanolamin, N-Methylisopropanolamin, Dibutanolamin, N-Ethylethanolamin und 4-Hydroxypiperidin besteht.

9. Härtungsmittelzusammensetzung nach einem der Ansprüche 1 bis 8, wobei die Amine **H7** mit mindestens einer primären und mindestens einer tertiären Aminogruppe, die bei der Umsetzung zur Bildung des Härtungsmittels **H** verwendet werden, aus der Gruppe ausgewählt sind, die aus N,N-Dimethylaminoethylamin, N,N-Diethylaminoethylamin, N,N-Dimethylaminopropylamin und N,N-Diethylaminopropylamin besteht.

10. Härtungsmittelzusammensetzung nach Anspruch 9, wobei bei der Umsetzung zur Bildung des Härtungsmittels **H** auch die hydroxyfunktionellen sekundären Amine **H6** verwendet werden und aus Aminen mit mindestens einer sekundären Aminogruppe und mindestens einer Hydroxylgruppe ausgewählt sind, die wiederum aus der Gruppe ausgewählt sind, die aus Diethanolamin, N-Methylethanolamin, Dipropanolamin, Diisopropanolamin, N-Methylpropanolamin, N-Methylisopropanolamin und 4-Hydroxypiperidin besteht.

11. Verfahren zur Herstellung der Härtungsmittelzusammensetzung **H** nach einem der Ansprüche 1 bis 10, umfassend die folgenden Schritte:

(a) Herstellen eines hydrophil modifizierten Epoxidharzes durch Umsetzen eines zumindest difunktionellen Hydroxypolyoxyalkylens **H2** und eines zumindest difunktionellen Epoxids **H1** in der Gegenwart eines sauren Katalysators **K1** unter Erwärmung auf 200 °C,
(b) in einer separaten Reaktion Herstellen eines Imins aus einem aliphatischen Amin **H51** mit mindestens einer primären Aminogruppe und mindestens einer sekundären Aminogruppe in seinem Molekül und einem Blocker **H52** für primäre Aminogruppen, wobei der Blocker vorzugsweise Carbonylgruppen von einem Keton oder einem Aldehyd aufweist, unter Bildung eines Imins **H5,** das ein Ketimin oder ein Aldimin ist,
(c) Zugeben zu dem Produkt **H5** aus Schritt (a) von ungesättigten Fettsäuren **H42** mit einer Carboxylfunktionalität von mehr als eins, einem Katalysator und gegebenenfalls hydroxyaromatischen Verbindungen H3, bei deren Umsetzung ein Teil der Epoxidgruppen verbraucht wird, Zugeben des Produktes **H5** aus Schritt (b) und Umsetzen, bis die sekundären Aminogruppen von **H5** verbraucht worden sind,
(d) gegebenenfalls Zugeben sekundärer Hydroxyamine **H6** und Aufrechterhalten der Reaktion, bis alle sekundären Aminogruppen von **H6** verbraucht worden sind,
(e) gegebenenfalls Zugeben primärer-tertiärer Amine **H7** und Durchführen der Reaktion, bis alle Epoxidgruppen verbraucht worden sind,

wobei einer der Schritte (d) und (e) oder beide in beliebiger Reihenfolge durchgeführt werden,

(f) gegebenenfalls Zugeben weiterer Diepoxide **H1,** um alle verbliebenen Aminogruppen zu verbrauchen,

(g) Neutralisieren des Reaktionsprodukt von Schritt (c), (d), (e) oder (f) durch Zugabe einer organischen oder anorganischen Säure und Zugeben von Wasser zu dem neutralisierten Gemisch, um die Ketimingruppen zu zersetzen, unter Regeneration primärer Aminogruppen und des Blockers, der dann abdestilliert wird.

**12.** Verfahren zur Herstellung einer wässerigen Zweikomponenten-Beschichtungszusammensetzung, umfassend das Zugeben eines Epoxidharzes **E** mit funktionellen Epoxidgruppen zu der Härtungsmittelzusammensetzung **H** nach einem der Ansprüche 1 bis 10.

**13.** Verfahren nach Anspruch 12, wobei das Epoxidharz E ein flexibilisiertes wässerig dispergierbares Epoxidharz ist.

**14.** Verfahren zur Verwendung der wässerigen Zweikomponenten-Beschichtungszusammensetzung, hergestellt mit dem Verfahren nach einem der Ansprüche 12 oder 13, beim Auftragen einer Mehrfachbeschichtung, die ein Substrat mit einer wässerigen Zweikomponenten-Beschichtungszusammensetzung, hergestellt mit dem Verfahren nach einem der Ansprüche 12 oder 13, umfasst, unter Bildung einer ersten Beschichtung und Auftragen einer zweiten Schicht auf die erste Schicht unter Verwendung einer lösungsmittelhaltigen oder lösungsmittelfreien Deckschichtzusammensetzung.

**15.** Verfahren nach Anspruch 14, wobei die Deckschichtzusammensetzung ein System ist, das durch Michael-Addition härtet.

## Revendications

**1.** Composition de durcisseur H pour une formulation de revêtement à deux emballages à base de résine époxy aqueuse, la composition de durcisseur H comprenant des produits de réaction

- d'époxydes au moins difonctionnels H1,
- d'hydroxypolyoxyalkylènes au moins difonctionnels H2,
- éventuellement, de composés hydroxyaromatiques difonctionnels H3,
- d'acides gras insaturés H42 ayant une fonctionnalité de carboxyle de plus d'un qui comprennent ce qu'on appelle les acides gras dimères,
- d'amines secondaires H5 ayant des groupes amino primaire bloqués par carbonylimine supplémentaires, obtenues par réaction d'amines H51 ayant au moins un, préférablement au moins deux groupes amino primaire et au moins un groupe amino secondaire avec des composés de carbonyle H52 qui ont un groupe carbonyle d'aldéhyde ou de cétone, et au moins un, préférablement les deux parmi

- des amines secondaires fonctionnalisées par H6 ayant au moins un groupe amino secondaire et au moins un groupe hydroxyle, et
- des amines H7 ayant au moins un groupe amino primaire, et au moins un groupe amino tertiaire,

les acides gras insaturés H42 étant incorporés dans le durcisseur sous la forme de bêta-hydroxy esters, la quantité spécifique de substance de groupes bêta-hydroxyester issue d'acides gras insaturés H42, sur la base de la masse de solides dans le durcisseur H, étant de 0,2 mole/kg à 2 mole/kg, et de l'eau étant ajoutée à ces produits de réaction de H1, H2, H3, H42, H5, H6 et H7 pour décomposer les carbonylimines qui sont des cétimines ou des aldimines, et pour libérer les groupes amino primaire pour former la composition de durcisseur H.

**2.** Composition de durcisseur selon la revendication 1, la quantité spécifique de substance de groupes bêta-hydroxyester issue d'acides gras insaturés H42, sur la base de la masse de solides dans le durcisseur H, étant de 0,25 mole/kg à 1,5 mole/kg.

**3.** Composition de durcisseur selon l'une quelconque des revendications 1 et 2, les époxydes au moins difonctionnels H1 étant des esters de glycidyle de composés de type acide au moins difonctionnels H11, ou des éthers de glycidyle de composés hydroxylés au moins difonctionnels H12, ces dits composés de type acide H11 étant des acides carboxyliques aromatiques ou aliphatiques ayant jusqu'à quarante atomes de carbone et étant préférablement choisis dans le groupe constitué par l'acide téréphtalique, l'acide isophtalique, l'acide adipique, l'acide dodécanedioïque et un acide cyclohexanedicarboxylique, et ces dits composés hydroxylés H12 étant des composés aromatiques ou aliphatiques ayant au moins deux groupes hydroxyle et jusqu'à quarante atomes de carbone par molécule, et étant préférablement choisis dans le groupe constitué par un hexanediol, un dihydroxycyclohexane, des oxyalkylènediols oligomériques ou polymériques, particulièrement ceux issus d'hydroquinone, de résorcinol, de 4,4'-dihydroxydiphényle, de 4,4'-dihydroxydiphénylsulfone, de 4,4'-dihydroxybenzophénone, de 4,4'-dihydroxydiphénylméthane, de 2,2-(4,4'-dihydroxydiphényl)propane, ou de novolaks à masse molaire faible ou oligomériques basés sur le phénol, et/ou des isomères du crésol.

4. Composition de durcisseur selon l'une quelconque des revendications 1 à 3, les hydroxypolyoxyalkylènes au moins difonctionnels H2 étant choisis dans le groupe constitué par des polyoxyéthylène diols ayant une masse molaire moyenne en masse allant de 1 000 g/mole à 10 000 g/mole.

5. Composition de durcisseur selon l'une quelconque des revendications 1 à 4, les composés hydroxyaromatiques difonctionnels H3 étant choisis dans le groupe constitué par le bisphénol A, le bisphénol F, et des mélanges correspondants.

6. Composition de durcisseur selon l'une quelconque des revendications 1 à 5, les acides gras saturés H42 ayant une fonctionnalité de carboxyle de plus d'un étant des acides gras dimères issus de tallöl.

7. Composition de durcisseur selon l'une quelconque des revendications 1 à 6, les amines secondaires H5 ayant des groupes amino primaire bloqués par carbonylimine supplémentaires étant obtenues par réaction d'amines H51 ayant deux groupes amino primaire et au moins un groupe amino secondaire qui sont choisies dans le groupe constitué par la diéthylènetriamine, la triéthylènetétramine, la tétraéthylènepentamine, la dipropylènetriamine, la tripropylènetétramine, la tétrapropylène-pentamine, la dibutylènetriamine, la tributylènetétramine, et la tétrabutylènepentamine, avec des composés de carbonyle H52 qui ont un groupe carbonyle de cétone, et qui sont choisis dans le groupe constitué par l'acétone, la méthyléthylcétone, la diéthylcétone, la méthylpropylcétone et la méthylisobutylcétone.

8. Composition de durcisseur selon l'une quelconque des revendications 1 à 7, les amines secondaires fonctionnalisées par hydroxy H6 ayant au moins un groupe amino secondaire et au moins un groupe hydroxyle utilisées dans la réaction pour former le durcisseur H étant choisies dans le groupe constitué par la diéthanolamine, la N-méthyléthanolamine, la dipropanolamine, la diisopropanolamine, la N-méthylpropanolamine, la N-méthylisopropanolamine, la dibutanolamine, la N-éthyléthanolamine et la 4-hydroxypipéridine.

9. Composition de durcisseur selon l'une quelconque des revendications 1 à 8, les amines H7 ayant au moins un groupe amino primaire, et au moins un groupe amino tertiaire utilisées dans la réaction pour former le durcisseur H étant choisies dans le groupe constitué par la N,N-diméthylaminoéthylamine, la N,N-diéthylaminoéthylamine, la N,N-diméthylaminopropylamine, et la N,N-diéthylaminopropylamine.

10. Composition de durcisseur selon la revendication 9, les amines secondaires fonctionnalisées par hydroxy H6 étant également utilisées, et étant choisies parmi des amines ayant au moins un groupe amino secondaire et au moins un groupe hydroxyle utilisées dans la réaction pour former le durcisseur H étant choisies dans le groupe constitué par la diéthanolamine, la N-méthyléthanolamine, la dipropanolamine, la diisopropanolamine, la N-méthylpropanolamine, la N-méthylisopropanolamine, et la 4-hydroxypipéridine.

11. Procédé pour la préparation de la composition de durcisseur H selon l'une quelconque des revendications 1 à 10, comprenant les étapes de :

(a) préparation d'une résine époxy modifiée de manière hydrophile par mise en réaction d'un hydroxypolyoxyalkylène au moins difonctionnel H2 et d'un époxyde au moins difonctionnel H1 en la présence d'un catalyseur acide K1, avec chauffage jusqu'à 200 °C,
(b) préparation, dans une réaction distincte, d'une imine à partir d'une amine aliphatique H51 ayant au moins un groupe amino primaire, et au moins un groupe amino secondaire dans sa molécule, et d'un agent de blocage H52 pour des groupes amino primaire, lequel agent de blocage possède préférablement des groupes carbonyle d'une cétone ou d'un aldéhyde, pour former une imine H5 qui est une cétimine ou une aldimine,
(c) ajout au produit de l'étape (a), d'acides gras insaturés H42 ayant une fonctionnalité de carboxyle de plus d'un, d'un catalyseur, et éventuellement, de composés hydroxyaromatiques H3, dans la réaction desquels une partie des groupes époxydes est consommée, ajout du produit H5 de l'étape (b) et mise en réaction jusqu'à ce que les groupes amino secondaire de H5 aient été consommés,
(d) éventuellement, ajout d'hydroxyamines secondaires H6, et maintien de la réaction jusqu'à ce que tous les groupes amino secondaire de H6 aient été consommés,

(e) éventuellement, ajout d'amines primaires-tertiaires H7, et mise en œuvre de la réaction jusqu'à ce que tous les groupes époxydes aient été consommés,

l'une ou l'autre des étapes (d) et (e) ou les deux étant réalisée(s), en une séquence quelconque,

(f) éventuellement, ajout de diépoxydes supplémentaires H1 pour consommer tous les groupes amino restants, (g) neutralisation du produit de réaction de l'étape (c), (d), (e) ou (f) par ajout d'un acide organique ou inorganique, et ajout d'eau au mélange neutralisé pour décomposer les groupes cétimine, avec régénération de groupes amino primaire, et de l'agent de blocage qui est ensuite distillé.

12. Procédé pour la préparation d'une composition de revêtement à deux emballages aqueuse comprenant un ajout à la composition de durcisseur H selon l'une quelconque des revendications 1 à 10 d'une résine époxy E ayant des groupes époxydes fonctionnels.

13. Procédé selon la revendication 12, la résine époxy E étant une résine époxy dispersible de manière aqueuse flexibilisée.

14. Procédé d'utilisation de la composition de revêtement à deux emballages aqueuse préparée par le processus selon l'une quelconque des revendications 12 et 13 dans l'application d'un revêtement multicouche comprenant le revêtement d'un substrat avec la composition de revêtement à deux emballages aqueuse préparée par le processus selon l'une quelconque des revendications 12 et 13 pour former un premier revêtement, et l'application d'une deuxième couche au-dessus dudit premier revêtement en utilisant une composition de revêtement supérieur à base de solvant ou sans solvant.

15. Procédé selon la revendication 14, la composition de revêtement supérieur étant un système qui durcit par addition de Michael.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011118791 A1
- SG 184260 A1
- EP 2727968 A1
- WO 2014072308 A2
- WO 2012150312 A1
- EP 0491550 A2
- EP 0000605 A1
- EP 2374836 A1

- WO 2014166880 A1
- WO 2018005077 A1
- EP 3085748 A1
- WO 2011124663 A1
- WO 2011124664 A1
- WO 2011124665 A1

**Non-patent literature cited in the description**

- **SUN H. et al.** Synthesis and characterisation of emulsion-type curing agent of water-borne epoxy resin. *Journal of Applied Polymer Science,* 30 May 2013

- **R. R. JAY.** *Anal. Chem.,* 1964, vol. 36, 667-668